# EUROPEAN PATENT SPECIFICATION

(11) **EP 1 504 211 B1**
(45) Date of publication and mention of the grant of the patent: **10.01.2007**
(21) Application number: 03730925.9
(22) Date of filing: 08.05.2003
(51) Int. Cl.: F16L 1/26, F16L 1/10

(54) **DEVICE FOR CONNECTING PIPELINES**
VORRICHTUNG ZUR VERBINDUNG VON ROHRLEITUNGEN
DISPOSITIF POUR RACCORDER DES CONDUITES

(30) Priority: 10.05.2002 NO 20022259
(43) Date of publication of application: 09.02.2005
(73) Proprietor: Advanced Production and Loading AS, 4816 Kolbjornsvik (NO)
(72) Inventor: ASKESTAD, Sigmund, N-4900 Tvedestrand (NO)
(74) Representative: Cronin, Brian Harold John
(86) International application number: PCT/NO2003/000150
(87) International publication number: WO 2003/095881

(56) References cited:
- GB-A- 2 327 109
- GB-A- 2 375 381

## Description

### Field of invention

The present invention relates to devices for connecting pipelines. More specifically, the invention concerns devices for alignment and connecting pipelines the ends of which may be mutually movable prior to connecting and thus not aligned. The device may be used for repeated connection/disconnection of pipelines.

### Background of the invention and prior art

Devices for connecting and disconnecting pipelines are advantageously placed in pipelines for transferring fluid from for example a production platform or a storage place to a transport vessel. This may be desirable for security reasons, for example when the drift of the vessel is too large or the rotation is too large, with risk both with regard to health, environment and values, or owing to functional advantages by having a connectable/disconnectable coupling in a pipeline.

A device for connecting pipelines has advantageously functionality for connection and disconnection even at relatively large movements between the end of the pipelines, both in the form of rotation, radial and angular movement. In some situations it will be of great significance for the security if a device for connecting pipelines may be disconnected quickly. It can also be advantageous if connection and disconnection can be carried out with remote control without need for manual operations.

There are many devices for connecting pipelines, e.g. GB 2 327 109 A. However, disadvantages are to a varying degree attached to the previously known devices. Some examples of such disadvantages are as follows:
- Often there is not sufficient control with pretensioning or tightening moment for connected pipelines.
- In many cases there will be a change with time of said tightening moments due to wear and tear or other break down mechanisms with possibly resulting leakage and danger to people, environment and values.
- In many cases the tool for pretensioning bolts will not be permanently integrated in the connecting device, which means that part of the connecting operation as a whole must be carried out manually. This also influences the time for connecting and disconnecting.
- For many devices there is no possibility of rapid disengagement, which might be an absolute requirement in some connections, particularly for security reasons.
- Several couplings have only one barrier for sealing between the pressure in the pipeline and the external environment.
- For connecting devices with two barriers in the seal it is as a rule only possible to pressure test the connection as a whole, i.e. it cannot be securely detected whether both barriers are tight.
- Some connecting devices are very sensitive with respect to relative movement which may be accepted between the ends of the pipeline, which is conducive to narrow margins which may be accepted prior to the coupling together.

There is demand for a device for connecting pipelines, the device having improved properties with respect to the above-mentioned problems.

### Summary of the invention

By means of the present invention the above-mentioned demand is met in that there is provided a device for aligning connection of pipelines, comprising a male part having at least one guide pin with tapered end and a female part having at least one correspondingly shaped receiving groove such that the male and the female part, each mounted on its pipeline end, may be joined together with aligning effect such that the ends of the pipeline are connected, and sealing, in the form of a single, double or multiple barrier, for sealing opposing sealing faces on the male and the female part, arranged so that the seal envelops the ends of the pipeline as coupled together the device being distinguished in that it further comprises:
at least one bolt located parallel to the longitudinal axis of the at least one pair of guide pin and receiving groove, said bolt being provided with means for controlled tensioning and long-term stable locking, and, if desired, a means for rapid release.

With coupling together of the ends of the pipelines it is also meant thereby that the extension of the ends of the pipeline, with opening for transport of fluid through the device, is becoming connected. By the phrase "the seal envelops the ends of the pipeline" it is also meant that the seal encloses the opening for transport of fluid through the device. The female and male parts of the device are preferably mounted as an extension on each of their pipeline ends, with flanges, however, the device may also be so shaped such that the ends can be secured inside the device.

The device according to the invention most preferably comprises two pairs of guide pins and receiving grooves, with a threaded bolt in the center axis of each pair of guide pin and receiving groove. Said embodiment is preferred for most pipe sizes.

The device according to the invention preferably comprises, particularly for large pipe sizes, four pairs or more of guide pins and receiving grooves, with a threaded bolt in the center axis of each pair of guide pin and receiving groove. Increased pipe size makes it more advantageous with several pairs of guide pins and receiving grooves, preferably with one bolt for each pair.

The device according to the invention may for small pipes preferably comprise one pair of guide pin and receiving groove, with a threaded bolt or swan socket between the pipeline center axis and the one pair of guide pin and receiving groove.

The means for controlled tensioning of bolts and lifting of bolts is preferably of hydraulic type, with one means for each bolt.

The device preferably comprises a means for rough turning of either the male or the female part about one pipeline axis, such that the guide pins and receiving grooves may be essentially aligned with respect to rotation.

The device further advantageously comprises a means for pressure testing of the seals, in the form of a nipple and grooves to each room between the seals, however, for one barrier seals to between the innermost seal and the pipeline, connected to hydraulic equipment.

The female part preferably comprises, from the center axis and radially outwards, opening for transport of fluid, a hub shaped symmetrically around the opening, receiving grooves adapted to the guide pins of the male part, guide edges and external skirt, the hub, the receiving grooves and the guide edges contributing to the aligning effect when joining the female and the male part. Thus, the male and the female part, for the sides to be joined, are shaped as tapered guide pins, guide edges and hubs which fit into correspondingly shaped grooves so that the alignment increases as the parts are joined together.

### Drawings

Fig. 1 shows a section of the device according to the invention, prior to the coupling together.

Fig. 2 shows the device coupled together.

Fig. 3 shows the bolts driven down in position below the lower flange.

Fig. 4 shows the bolts turned to lockable position, hydraulically pretensioned.

Fig. 5 shows the pretension mechanically secured.

Fig. 6 shows activated rapid release.

Fig. 7 shows an alternative rapid releaser, and

Fig. 8 shows another embodiment of the device according to the invention for connecting the lower and upper part.

### Detailed description

For the device according to the present invention hydraulic pretensioning of the bolts is preferably used, followed by mechanical locking by means of for example lock nuts. It is possible to use a very substantial force of contraction, which makes it possible for large gasket diameters and standard flange couplings, and, moreover, use of several seal barriers in the gasket system, for example 2 barriers or more.

In the device according to the invention the tool for pretensioning or make-up of the bolts is permanently attached, with one tool for each bolt, which enables a completely remotely operated coupling with good control of the make-up torques. Preferably, there is also included a hydraulically activable rapid release, such that the sometimes very strict requirement to maximum allowable disconnecting time can be met.

The device for connecting pipelines according to the invention can accept relatively large relative movements between the two pipeline ends and the two main parts of the device, both in the form of rotation and radial and angular movements. This is obtained by using advantageous geometries which are conducive thereto that the aligning effect becomes substantial, both with respect to rotation and radial and angular displacement. Accordingly, when the two main parts of the coupling approach each other during the connecting process, the main parts and the ends of the pipelines will become aligned as the parts are being coupled together, whereby the maximum allowed misfit between the ends of the pipelines prior to coupling together is relatively large. Said aligning takes place without overloading any parts of the device according to the invention mechanically, which is obtained through a combination of the shape of the device and the dimensioning of the device.

The male and female part of the device, mounted on each of their pipeline end, must be brought into reasonable engagement by means of other equipment before the coupling together with the device may take place.

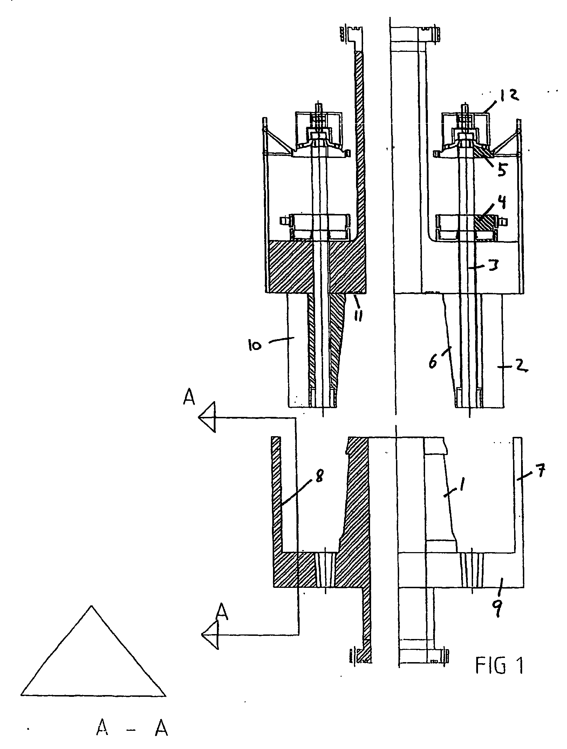

Reference is now made to Fig. 1 which illustrates a device according to the invention, with two guide pins 6, 2 and two receiving grooves 1, 8, 7. The device consists of two main parts, viz. a female part 9 and a male part 10. In the female part 9 there are holes for the bolts 3 which have been mounted into a pretensioning tool 4, 5 for the bolts located in the male part 10. The bolts can be moved up and down by means of a bolt lifter which is part of a tool 4, 5 for make-up of the bolts and are turned by means of a turning motor which turns the bolt lifter, the bolt and an optional rapid releaser 12. In this position the bolts 3 are parked in a radial guide 6 integrated in the guide pins. The bolt can be provided with threads or, more simply, with swan socket or hooks (as it appears from further figures). Correspondingly, in the lower main part, the female part 9, holes are arranged either with threads or adapted grooves.

A guide edge 8 in the female part has a saw-toothed profile with two or more teeth. Correspondingly, on the upper part of the device, on the guide pin, a directional guide 2 is arranged which may be a radially mounted pin or saw teeth corresponding to the guide edge 8 mounted in the female part of the device. The guide edge 8 may either be shaped as a complete triangle (as shown in section A-A) for fluid couplings with entirely passive control of the relative direction of rotation of the two main parts or with cut-off teeth where a motor for the initial rotation is used, after which the guide edge successively takes over for fine adjustment of the rotation. The purpose of the rotation devices is to ensure that the bolts in the upper part of the device, as illustrated in the male part, will be essentially aligned with the holes in the lower part of the device, i.e. the holes in the female part. Around the center of the fluid connection there is a conical hub 1 which can have an upper and lower guide edge for radial control with respect to the guide 6. The upper and lower guide edge will together give alignment of the radial guide 6 with respect to the hub 1. Said hub corresponds to a specially shaped hub or flange. A corresponding alignment effect can be obtained by means of axial contact between an upper flange 10 and an external skirt 7 in combination with only one radial guide edge on hub 1.

The lower part 4 of the pretensioning tool is mounted in the male part, on an upper flange. This tool consists of a hydraulic part for pretensioning or make-up of the bolt when it has come into position. Further, a lock nut or a locking device is also included so that the hydraulic may be uncoupled or relieved without loosing the pretension. Such tools are known from pretensioning of flanges and are commercially available.

At the top of the upper part 5 of the bolt pretensioning tool a rapid releaser 12 is illustrated which can be used in systems where very rapid uncoupling is required. According to the further figures this is hydraulically activated by means of a cylinder in the center of the extension of the bolt. The rapid release causes the bolt to loose the initial tension momentarily and to loose the engagement with the lower main part of the device. Thus, the bolts are suspended or fastened in the rapid releaser.

The gaskets 11 provide sealing between the upper flange 10 of the male part and the hub 1 in the female part when the main parts of the device have been completely joined together. The gaskets 11 can be both axially and radially arranged.

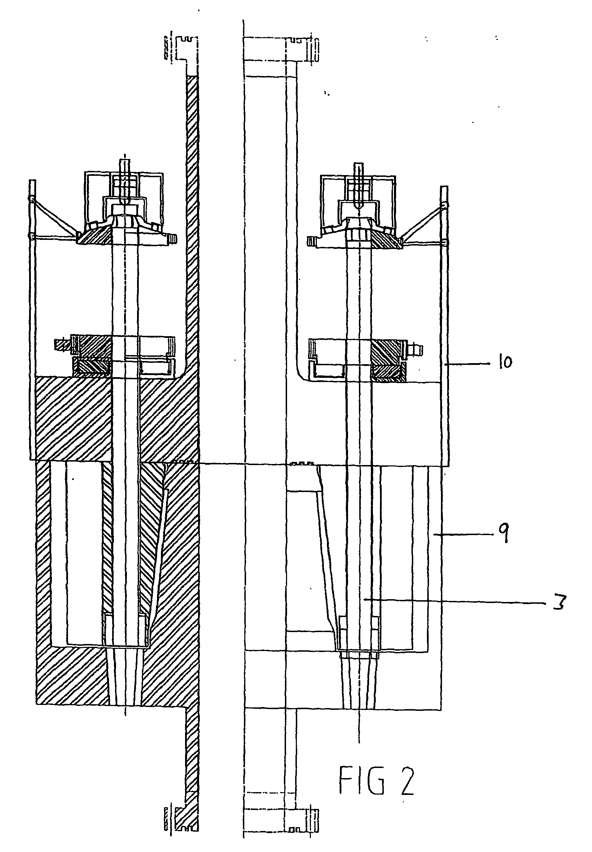

In Fig. 2 the device according to the invention has been illustrated joined together.

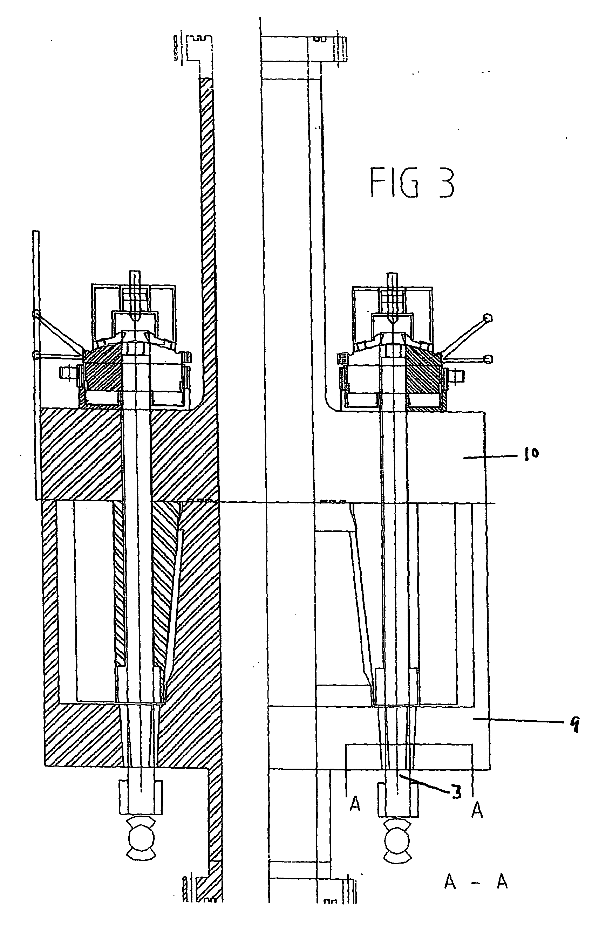

In Fig. 3 the bolts are shown driven down into position below the lower flange 9 of the female part, and in section below the lower flange the bolts are illustrated in unlocked position.

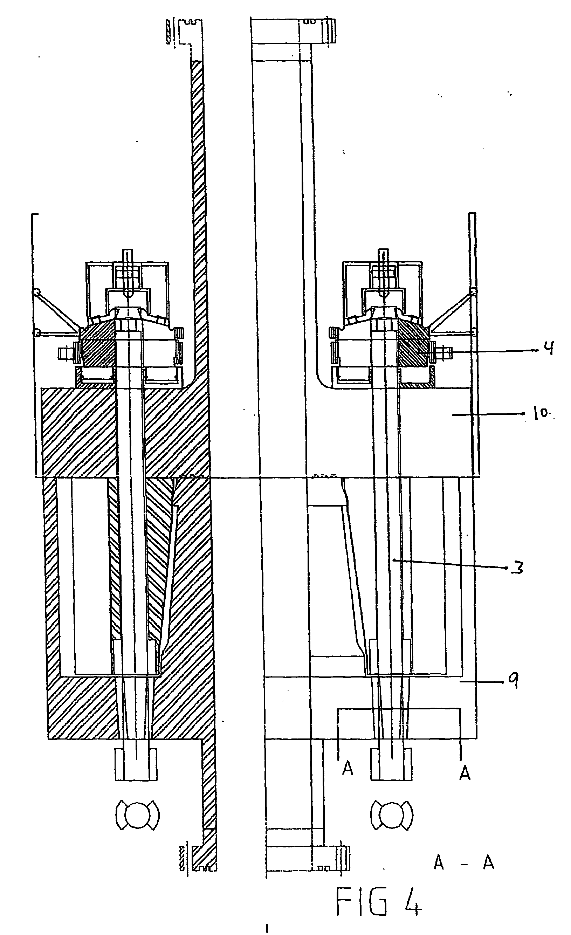

In Fig. 4 the bolts have been turned to locked position and hydraulically pretensioned with the piston on the lower part 4 of the bolt pretensioning tool against the upper flange 10 of the male part.

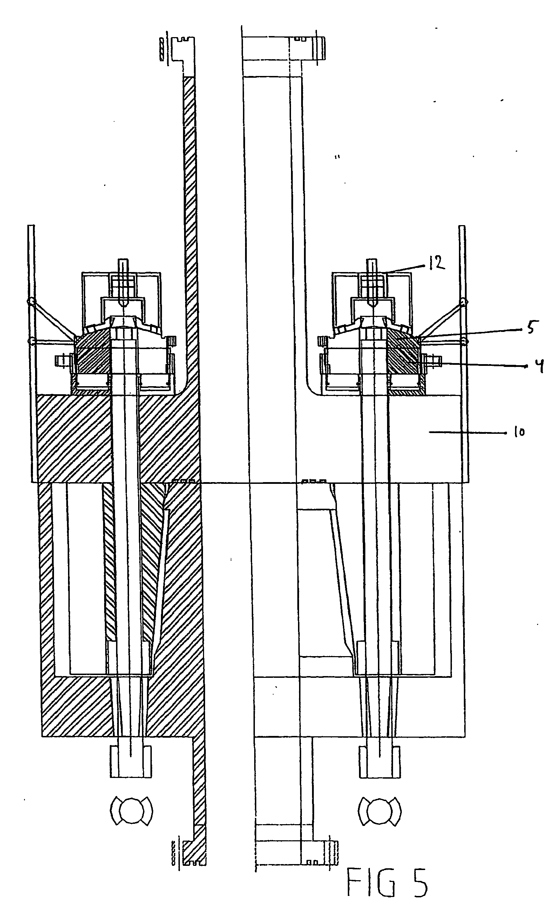

In Fig. 5 it is shown that the pretensioning is mechanically secured by a lock nut, with the hydraulic released.

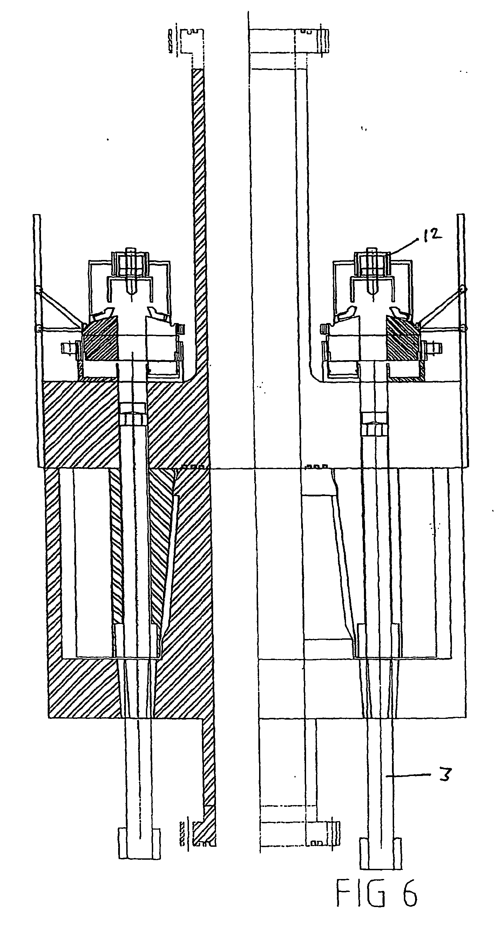

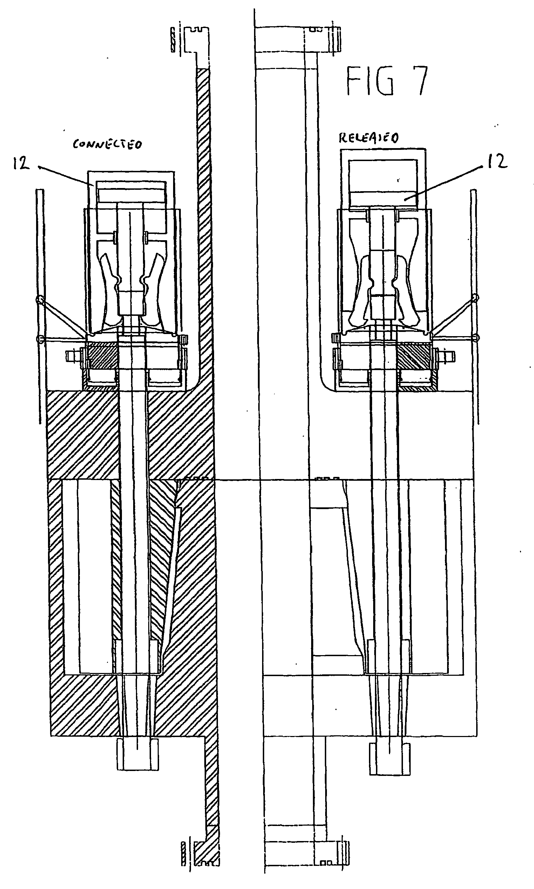

In Fig. 6 an activated rapid releaser 12 is shown whereas in Fig. 7 an alternative rapid releaser 12 is shown.

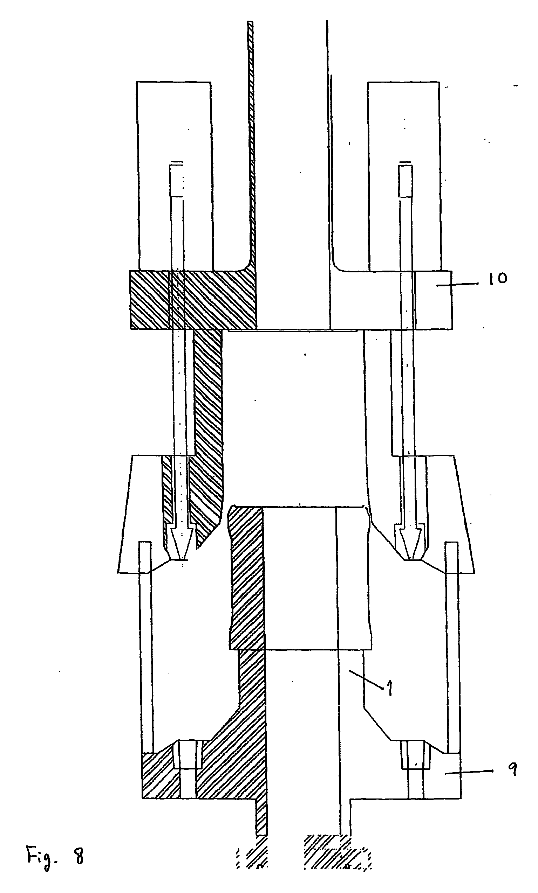

In Fig. 8 the device according to the invention is illustrated with alternative control for connecting the two main parts and thereby the ends of the pipelines. The illustrated embodiment has two radial control grooves on the hub 1 which provide for both radial and axial alignment.

## Claims

1. Device for aligning connection of pipelines, comprising a male part (10) with at least one guide pin (6, 2) with tapered end and a female part (9) with at least one correspondingly shaped receiving groove (1, 8, 7), so that the male and female part, each mounted on its pipeline end, can be joined together with aligning effect so that the ends of the pipelines are connected, and sealing (11), in the form of a single, double or multiple barrier, for sealing opposing sealing faces on the male and female part, arranged so that the sealing envelops the ends of the pipelines as connected, and sealing (11), in the form of a single, double or multiple barrier, for sealing opposing sealing faces on the male and female part, arranged so that the sealing envelops the ends of the pipelines as connected
**characterized in that** the device further comprises:
at least one bolt (3), arranged parallel to the longitudinal axis of the at least one pair of guide pin and receiving groove, said bolt being equipped with means (4, 5) for controlled tensioning and long-term stable locking, and optionally a means (12) for rapid release.

2. Device according to claim 1,
**characterized in that** the device comprises two pairs of guide pins (6, 2) and receiving grooves (1, 8, 7), with a threaded bolt (3) in the center axis of each pair of guide pin and receiving groove.

3. Device according to claim 1,
**characterized in that** the device comprises four pairs of guide pins (6, 2) and receiving grooves (1, 8, 7) with a threaded bolt (3) in the center axis of each pair of guide pin and receiving groove.

4. Device according to claim 1,
**characterized in that** the device comprises one pair of guide pins (6, 2) and receiving grooves (1, 8, 7) with a threaded bolt (3) or swan socket between the pipeline center axis and the one pair of guide pin and receiving groove.

5. Device according to anyone of the preceding claims,
**characterized in that** the means (4, 5) for controlled tensioning of the bolts is of hydraulic type with one means for each bolt.

6. Device according to claim 5,
**characterized in that** the means (4, 5) for controlled tensioning of the bolts also can be used for lifting and lowering of the bolts.

7. Device according to claim 1,
**characterized in that** it comprises a means for rough turning about one pipeline axis of either the male or the female part so that the guide pins and the receiving grooves can be essentially aligned with respect to rotation.

8. Device according to claim 1,
**characterized in that** the device comprises a means for pressure testing of the seals, in the form of a nipple and groove for each room between the seals, however, for one barrier seals to between the innermost sealing and the pipeline, coupled to hydraulic equipment.

9. Device according to claim 1,
**characterized in that** the female part from the center axis and radially outwards comprises opening for transportation of fluid, a hub symmetrically shaped around the opening, receiving grooves adapted to the guide pins of the male part, guide edges and external skirt, the hub, the receiving grooves and the guide edges contributing to the aligning effect when joining the female and the male part.

## Patentansprüche

1. Vorrichtung zum fluchtenden Verbinden von Rohrleitungen mit einem Steckteil (10), das über wenigstens einen Führungsstift (6, 2) mit einem angeschrägten Ende verfügt, und mit einem Aufnahmeteil (9), das über wenigstens eine entsprechend geformte Aufnahmenut (1, 8, 7) verfügt, so dass das Steckteil und das Aufnahmeteil, die jeweils an ihrem Rohrleitungsende angebracht sind, mit fluchtender Wirkung zusammenfügbar sind, so dass die Enden der Rohrleitungen verbunden sind, und mit einer Abdichtung (11) in Gestalt einer einfachen, doppelten oder mehrfachen Sperre zum Abdichten der gegenüberliegenden Abdichtseiten auf dem Steckteil und dem Aufnahmeteil, die so angeordnet ist, dass die Abdichtung die Enden der Rohrleitungen beim Verbinden umschließt, **dadurch gekennzeichnet, dass** die Vorrichtung weiterhin
wenigstens einen Bolzen (3) aufweist, der parallel zu der Längsachse des wenigstens einen Führungsstift- und Aufnahmenutpaares angeordnet ist, wobei der Bolzen mit Mitteln (4, 5) zum kontrollierten Spannen und dauerhaften stabilen Verriegeln und optional mit einem Mittel (12) zum schnellen Lösen ausgestattet ist.

2. Vorrichtung nach Anspruch 1, **dadurch gekennzeichnet, dass** die Vorrichtung über zwei Paare von Führungsstiften (6, 2) und Aufnahmenuten (1, 8, 7) mit einem mit einem Gewinde versehenen Bolzen (3) in der Mittelachse jedes Führungsstift- und Aufnahmenutpaares verfügt.

3. Vorrichtung nach Anspruch 1, **dadurch gekennzeichnet, dass** die Vorrichtung über vier Paare von Führungsstiften (6, 2) und Aufnahmenuten (1, 8, 7) mit einem mit einem Gewinde versehenen Bolzen (3) in der Mittelachse jedes Führungsstift- und Aufnahmenutpaares verfügt.

4. Vorrichtung nach Anspruch 1, **dadurch gekennzeichnet, dass** die Vorrichtung über ein Paar von Führungsstiften (6, 2) und Aufnahmenuten (1, 8, 7) mit einem mit einem Gewinde versehenen Bolzen (3) oder einer Bajonettfassung zwischen der Rohrleitungszentralachse und dem einen Führungsstift- und Aufnahmenutpaar verfügt.

5. Vorrichtung nach einem der vorangehenden Ansprüche, **dadurch gekennzeichnet, dass** die Mittel (4, 5) zum kontrollierten Spannen der Bolzen hydraulischer Art mit einem Mittel für jeden Bolzen sind.

6. Vorrichtung nach Anspruch 5, **dadurch gekennzeichnet, dass** die Mittel (4, 5) zum kontrollierten Spannen der Bolzen auch zum Anheben oder Absenken der Bolzen verwendet werden können.

7. Vorrichtung nach Anspruch 1, **dadurch gekennzeichnet, dass** sie über ein Mittel zum groben Drehen um eine Rohrleitungsachse entweder des Steckteils oder des Aufnahmeteils verfügt, so dass die Führungsstifte und Aufnahmenuten im Wesentlichen in Bezug auf die Drehung fluchtend ausrichtbar sind.

8. Vorrichtung nach Anspruch 1, **dadurch gekennzeichnet, dass** die Vorrichtung über ein mit einer hydraulischen Einrichtung verbundenes Mittel zum Druckprüfen der Abdichtungen in Gestalt eines Nippels und einer Nut für jeden Raum zwischen den Abdichtungen verfügt, jedoch für wenigstens eine Abdichtung, die zwischen der innersten Abdichtung und der Rohrleitung abdichtet.

9. Vorrichtung nach Anspruch 1, **dadurch gekennzeichnet, dass** das Aufnahmeteil von der Mittelachse und radial nach außen eine Öffnung zum Transportieren eines Fluids, eine symmetrisch um die Öffnung ausgebildete Buchse, an die Führungsstifte des Steckteils angepasste Aufnahmenuten, Führungsränder und eine äußere Ummantelung aufweist, wobei die Buchse, die Aufnahmenuten und die Führungsränder zu der fluchtenden Wirkung beitragen, wenn das Aufnahmeteil und das Steckteil zusammengefügt werden.

## Revendications

1. Dispositif d'alignement de raccord de pipelines, comprenant une pièce mâle (10) avec au moins une broche de guidage (6,2) ayant une extrémité conique et une pièce femelle (9) avec au moins une rainure de réception de forme correspondante (1,8,7), de sorte que la pièce mâle et la pièce femelle, chacune montée sur son extrémité de pipeline, peuvent être assemblées ensemble avec un effet d'alignement de façon que les extrémités des pipelines soient raccordées, et une étanchéité (11) sous la forme d'une barrière unique, double ou multiple, pour assurer l'étanchéité des faces d'étanchéité opposées sur la pièce mâle et la pièce femelle, agencée de façon que l'étanchéité enveloppe les extrémités des pipelines tels que raccordés,
**caractérisé en ce que** le dispositif comprend de plus :
au moins un boulon (3), agencé parallèlement à l'axe longitudinal d'au moins une paire de broche de guidage et de rainure de réception, ledit boulon étant équipé de moyens (4,5) pour la mise en tension contrôlée et le verrouillage stable à long terme, et éventuellement de moyens (12) à libération rapide.

2. Dispositif selon la revendication 1,
**caractérisé en ce que** le dispositif comprend deux paires de broches de guidage (6,2) et de rainures de réception (1,8,7), avec un boulon fileté (3) dans l'axe central de chaque paire de broche de guidage et de rainure de réception.

3. Dispositif selon la revendication 1,
**caractérisé en ce que** le dispositif comprend quatre paires de broches de guidage (6,2) et de rainures de réception (1,8,7), avec un boulon fileté (3) dans l'axe central de chaque paire de broche de guidage et de rainure de réception.

4. Dispositif selon la revendication 1,
**caractérisé en ce que** le dispositif comprend une paire de broches de guidage (6,2) et de rainures de réception (1,8,7), avec un boulon fileté (3) ou une douille à baïonnette entre l'axe central du pipeline et la paire de broche de guidage et de rainure de réception.

5. Dispositif selon une quelconque des revendications précédentes,
**caractérisé en ce que** les moyens (4,5) pour la mise en tension contrôlée des boulons sont du type hydraulique avec un moyen pour chaque boulon.

6. Dispositif selon la revendication 5,
**caractérisé en ce que** les moyens (4,5) pour la mise sous tension contrôlée des boulons peuvent également être utilisés pour le levage et l'abaissement des boulons.

7. Dispositif selon la revendication 1,
**caractérisé en ce qu'**il comprend des moyens de rotation grossière autour d'un axe du pipeline de la pièce mâle ou de la pièce femelle, de sorte que les broches de guidage et les rainures de réception peuvent être sensiblement alignées par rapport à la rotation.

8. Dispositif selon la revendication 1,
**caractérisé en ce que** le dispositif comprend des moyens de test de pression des joints d'étanchéité, sous la forme d'un raccord et rainure pour chaque chambre entre les joints d'étanchéité, cependant, pour des joints d'étanchéité à une barrière entre l'étanchéité la plus interne et le pipeline, accouplés à l'équipement hydraulique.

9. Dispositif selon la revendication 1,
**caractérisé en ce que** la pièce femelle à partir de l'axe central et radialement vers l'extérieur comprend une ouverture pour le transport du fluide, un moyeu conformé symétriquement autour de l'ouverture, des rainures de réception conçues pour les broches de guidage de la pièce mâle, des bords de guidage et une jupe externe, le moyeu, les rainures de réception et les bords de guidage contribuant à l'effet d'alignement quand on assemble la pièce femelle et la pièce mâle.
